# EUROPÄISCHE PATENTSCHRIFT

(11) **EP 1 273 962 B1**
(45) Veröffentlichungstag und Bekanntmachung des Hinweises auf die Patenterteilung: **09.05.2007**
(21) Anmeldenummer: 02012754.4
(22) Anmeldetag: 08.06.2002
(51) Int. Cl.: G03B 15/03, H04N 5/225

(54) **Beleuchtungsvorrichtung für eine Bilderzeugungsvorrichtung**
Illumination device for an image recording device
Dispositif d'illumination pour un dispositif d'enregistrement d'image

(30) Priorität: 05.07.2001 DE 10132482
(43) Veröffentlichungstag der Anmeldung: 08.01.2003
(73) Patentinhaber: ROBERT BOSCH GMBH, 70442 Stuttgart (DE)
(72) Erfinder: Adolph, Dietrich, 73095 Albershausen (DE); Deuschle, Guenter, 73207 Koengen (DE)

(56) Entgegenhaltungen:
- EP-A- 0 959 425
- DE-U- 29 520 862

## Beschreibung

Die vorliegende Erfindung betrifft eine Beleuchtungsvorrichtung für eine Bilderzeugungsvorrichtung, insbesondere für eine Bilderzeugungsvorrichtung mit einem Weitwinkelobjektiv, mit einer Mehrzahl von Leuchtdioden, die ringförmig angeordnet sind, wobei jede Leuchtdiode zumindest eine Abstrahlrichtung (ϕₘₐₓ) mit einer maximalen Helligkeit aufweist.

### Stand der Technik

Beispielsweise bei der optischen Aufnahme mit CCD-Kameras (CCD = Charge-Coupled Device / ladungsgekoppeltes Bauelement) muss üblicherweise der Gegenstandsraum beleuchtet werden. Wenn die Gegenstände retroreflektierende Marken umfassen, beispielsweise mit µ-Glaskugeln beschichtete Folien, die sich wie Katzenaugen verhalten, ist es besonders vorteilhaft, wenn die Beleuchtung aus der gleichen Richtung wie der Sehstrahl der Kamera kommt. Wenn die Beleuchtungsrichtung der Beleuchtungsvorrichtung und die Aufnahmerichtung der Kamera beziehungsweise der Bilderzeugungsvorrichtung annähernd parallel sind, werden besonders gute Ergebnisse erzielt.

Um die Beleuchtungsrichtung und die Aufnahmerichtung möglichst parallel auszurichten, ist es bekannt, Beleuchtungsvorrichtungen einzusetzen, die ringförmig um das Kameraobjektiv herum angeordnet werden. Bekannte Ausführungsformen umfassen beispielsweise sogenannte Blitzringe an Fotokameras oder Ringe, die eine Mehrzahl von Leuchtdioden (LEDs) aufweisen. Insbesondere bei der Beleuchtung mittels Leuchtdioden kann das Problem auftreten, dass der beleuchtete Raum in Abhängigkeit von der Abstrahl-Charakteristik der verwendeten Leuchtdioden nicht die erwünschte Größe aufweist, das heißt zu klein ist. Die Abstrahl-Charakteristik von in diesem Zusammenhang eingesetzten Leuchtdioden ist häufig axialsymmetrisch mit einem Maximum der Helligkeit in einer Abstrahlrichtung, die auf der Symmetrieachse liegt. Mit einem zunehmenden Winkel zu der Abstrahlrichtung mit maximaler Helligkeit nimmt die Leuchtstärke in Punkten mit gleichem Abstand von der Leuchtdiode typischerweise in etwa glockenförmig ab. Ein charakteristisches Maß für die Abnahme der Leuchtstärke ist der Winkel ϕ_{1/2}, bei dem die Intensität noch 50 % der maximalen Intensität erreicht. Ein typischer Wert für diesen Winkel ϕ_{1/2} beträgt für im Zusammenhang mit den gattungsgemäßen Beleuchtungsvorrichtungen eingesetzte Leuchtdioden beispielsweise 20°. Dieser Winkel liefert zufriedenstellende Beleuchtungsergebnisse, wenn die Kameraobjektive Normalbis Tele-Charakteristik aufweisen. Beispielsweise wenn die Bilderzeugungsvorrichtung ein Weitwinkelobjektiv mit kleiner Brennweite aufweist, werden mit bekannten Beleuchtungsvorrichtungen aufgrund des Winkels ϕ_{1/2} jedoch keine befriedigenden Ergebnisse erzielt.

Aus der DE 295 20 862 U ist bereits eine Beleuchtungsvorrichtung gemäß dem Oberbegriff des Anspruchs 1 bekannt. Die Lichtquellen in Form von Leuchtdioden sind dort in sich reflektorartig erweiternden Bohrungen in einem Haltering angeordnet, während die elektrische Versorgung der Lichtquellen mittels einer hinter dem Haltering angeordneten Platine erfolgt. Der Winkel zwischen der Abstrahlrichtung mit maximaler Helligkeit von jeder Leuchtdiode und einer optischen Achse der Beleuchtungsvorrichtung wird durch den jeweiligen Neigungswinkel der Mittelachsen der Bohrungen im Haltering vorgegeben. Dies hat jedoch zum einen den Nachteil, dass die Herstellung einer größeren Anzahl von Bohrungen mit konvergierenden bzw. divergierenden Mittelachsen im Haltering verhältnismäßig aufwendig ist. Zum anderen ist zur Veränderung des Winkels eine Veränderung der Neigungswinkel der Bohrungen im Haltering erforderlich, so dass für Beleuchtungsvorrichtungen mit unterschiedlichen Winkeln unterschiedlich gebohrte Halteringe vorgehalten werden müssen.

Aus der EP-A-0 959 425 ist weiter bereits eine Beleuchtungsvorrichtung für eine automatische Videokamera bekannt, die ein um die Linsenanordnung der Kamera herum angeordnetes ringförmigen Array von LEDs aufweist, wobei eine vor dem LED-Array angeordnete ringförmige Dispersionslinse dafür sorgt, dass die Abstrahlrichtungen (ϕₘₐₓ) der LEDs mit maximaler Helligkeit nach dem Hindurchtritt durch die Dispersionslinse nicht parallel zueinander verlaufen.

### Vorteile der Erfindung

Bei der erfindungsgemäßen Beleuchtungsvorrichtung ist vorgesehen, dass der Winkel zwischen den Abstrahlrichtungen mit maximaler Helligkeit und der optischen Achse durch die Länge und/oder Form von Anschlussbeinen der Leuchtdioden festgelegt und/oder eingestellt wird, wobei die Leuchtdioden vier Anschlussbeine aufweisen, von denen zwei zum Festlegen und/oder Einstellen des Winkels zwischen den Abstrahlrichtungen mit maximaler Helligkeit und der optischen Achse verwendet werden. Hierbe wird bei Anordnung der Leuchtdioden auf einer Platine, die Ausrichtung von jeder Leuchtdiode durch die Länge ihrer Anschlussbeine festgelegt. Dies geschicht dadurch, dass jeweils zwei Anschlussbeine umgebogen werden, insbesondere bevor die entsprechenden Leuchtdioden auf der Platine angeordnet werden.

Bei der erfindungsgemäßen Beleuchtungsvorrichtung sind die Leuchtdioden derart angeordnet, dass zumindest einige der Abstrahlrichtungen mit maximaler Helligkeit nicht parallel zueinander verlaufen. Durch diese Lösung kann der Gegenstandsraum gleichmäßiger ausgeleuchtet werden, als dies mit vielen bekannten Beleuchtungsvorrichtungen möglich ist. Beispielsweise kann die erfindungsgemäße Beleuchtungsvorrichtung insgesamt einen Winkel ϕ_{1/2} von ungefähr 40° aufweisen. Dabei kann berücksichtigt werden, dass bei großen Winkeln ϕ aufgrund des Tangens-Effektes die Lichtstärke in einer Gegenstandsebene aufgrund des größeren Abstands vom Objektiv kleiner wird. Dies ist beispielsweise im Zusammenhang mit den eingangs erwähnten retroreflektierenden Folien von Bedeutung, weil das Rückstrahlvermögen dieser retroreflektierenden Folien bei zunehmender Schräge des Lichteinfalls abnimmt. Dieses Rückstrahlvermögen von retroreflektierenden Folien ist häufig bei senkrechtem Lichteinfall maximal.

Bei der erfindungsgemäßen Beleuchtungsvorrichtung ist vorgesehen, dass zumindest ein Teil der Mehrzahl von Leuchtdioden derart angeordnet ist, dass ihre Abstrahlrichtungen mit maximaler Helligkeit einen Winkel mit der optischen Achse einschließen, der ungleich 0° ist. Je nach der mit Hilfe der erfindungsgemäßen Beleuchtungsvorrichtung zu erzielenden Beleuchtungscharakteristik sind in diesem Zusammenhang sowohl Ausführungsformen möglich, bei denen alle Abstrahlrichtungen der Leuchtdioden derart gewählt werden, dass sich insgesamt eine symmetrische Anordnung ergibt, oder Ausführungsformen, bei denen die Abstrahlrichtungen der Leuchtdioden derart gewählt werden, dass sich für jede Leuchtdiode unterschiedliche Winkel zur optischen Achse ergeben. Selbstverständlich sind auch entsprechende Kombinationen möglich.

Bei bevorzugten Ausführungsformen der erfindungsgemäßen Beleuchtungsvorrichtung ist vorgesehen, dass der Winkel zwischen den Abstrahlrichtungen mit maximaler Helligkeit und der optischen Achse im Bereich von 15° bis 45° liegt, insbesondere ungefähr 30° beträgt. Ein entsprechender Winkel von 30° hat sich beispielsweise im Zusammenhang mit Weitwinkelobjektiven mit kleiner Brennweite als besonders vorteilhaft herausgestellt.

Zusätzlich oder, alternativ kann bei der erfindungsgemäßen Beleuchtungsvorrichtung weiterhin vorgesehen sein, dass die Leuchtdioden symmetrisch zur optischen Achse der Beleuchtungsvorrichtung angeordnet sind. Durch eine symmetrische Anordnung der Leuchtdioden wird eine besonders gleichmäßige Ausleuchtung des Gegenstandsraums erzielt.

Bei der erfindungsgemäßen Beleuchtungsvorrichtung ist weiterhin vorgesehen, dass die Leuchtdioden kreisringförmig angeordnet sind. Eine kreisringförmige Anordnung der Leuchtdioden bringt insbesondere Vorteile mit sich, weil sie an den Umfang eines Kameraobjektivs beziehungsweise den Umfang der das Kameraobjektiv bildenden Linsen angepasst werden kann.

Bei der erfindungsgemäßen Beleuchtungsvorrichtung ist weiterhin vorgesehen, dass die Leuchtdioden auf einer ringförmigen Platine angeordnet sind. Die ringförmigen, insbesondere kreisringförmigen, Abmessungen der Platine können ebenfalls an den Außenumfang eines Objektivs angepasst werden.

Insbesondere im vorstehend erläuterten Zusammenhang kann weiterhin vorgesehen sein, dass der Winkel zwischen den Abstrahlrichtungen mit maximaler Helligkeit und der optischen Achse zu einer Normalen der Platine eingeschlossen wird. In diesem Fall ist es beispielsweise möglich, die Platine im Wesentlichen senkrecht zu einer zylindermantelförmigen Oberfläche eines Objektivs auszurichten, was sich bereits im Zusammenhang mit bekannten gattungsgemäßen Beleuchtungsvorrichtungen als vorteilhaft herausgestellt hat.

Es ist vorgesehen, dass die Leuchtdioden vier Anschlussbeine aufweisen, von denen zumindest ein Anschlussbein einer Kathode und ein Anschlussbein einer Anode zugeordnet ist. Hinsichtlich der Ausrichtung der Leuchtdioden werden besonders gute Ergebnisse erzielt, wenn sowohl der Kathode als auch der Anode jeweils zwei Anschlussbeine zugeordnet sind.

Es ist vorgesehen, dass zumindest ein Anschlussbein von jeder Leuchtdiode an einem Ring aus leitendem Material befestigt ist. Die bezüglich des Rings aus leitendem Material außen liegenden Anschlussbeine der Leuchtdioden werden so nach außen umgebogen, dass jeweils beide Elektroden (Anode und Kathode) einer Leuchtdiode nach außen geführt werden und dort auf einer Leiterplatte wie zur Oberflächenmontage vorgesehene Bauteile aufgelötet werden können.

Weiterhin sind Ausführungsformen der erfindungsgemäßen Beleuchtungsvorrichtung möglich, bei denen vorgesehen ist, dass die Kathoden der Leuchtdioden an einem Ring aus leitendem Material angelötet sind. Auf diese Weise haben die Leuchtdioden ein gemeinsames Kathodenpotential, das beispielsweise durch einen Schalttransistor auf Masse gelegt werden kann. Dies erleichtert die gemeinsame elektrische Ansteuerung der Leuchtdioden.

Ohne dass dies eine Einschränkung darstellen soll, ist bei der erfindungsgemäßen Beleuchtungsvorrichtung vorzugsweise vorgesehen, dass sie vier bis sechzehn Leuchtdioden aufweist, insbesondere acht Leuchtdioden. Mit einer derartigen Anzahl von Leuchtdioden wird ein besonders gutes Preisleistungsverhältnis erzielt.

Bei bestimmten Ausführungsformen der erfindungsgemäßen Beleuchtungsvorrichtung kann beispielsweise vorgesehen sein, dass sie zur Verwendung bei der optischen Kraftfahrzeug-Achsvermessung vorgesehen ist. In diesem Fall ist es erwünscht, die eingesetzten Kameras möglichst nahe neben den Rädern des Kraftfahrzeugs zu platzieren, wobei gleichzeitig ein großes Sichtfeld durch die Kameras abgedeckt werden soll, damit die Kraftfahrzeuge während einer Vorbeifahrt vermessen werden können. In diesem Zusammenhang ist der Einsatz von Weitwinkelobjektiven besonders vorteilhaft.

Mit der erfindungsgemäßen Beleuchtungsvorrichtung werden beispielsweise gute Ergebnisse erzielt, wenn vorgesehen ist, dass zumindest ein Teil der Leuchtdioden vom Typ HPWT-DH00 ist. Leuchtdioden dieses Typs weisen nicht nur geeignete Abstrahl-Charakteristiken auf, sondern sind auch mit vier Anschlussbeinen ausgestattet, die sich in vorteilhafter Weise zur Ausrichtung einer jeweiligen Leuchtdiode verwenden lassen.

### Zeichnungen

Die Erfindung wird nachfolgend anhand der zugehörigen Zeichnungen noch näher erläutert.

Es zeigen:
- Figur 1a: eine Draufsicht auf eine bekannte Leuchtdiode vom Typ HPWT-DH00;
- Figur 1b: eine perspektivische Darstellung der Leuchtdiode gemäß Figur 1a;
- Figur 1c: eine Vorderansicht der Leuchtdiode gemäß Figur 1a;
- Figur 1d: eine Seitenansicht der Leuchtdiode gemäß Figur 1a;
- Figur 2: einen Graph, der die relative Beleuchtungsintensität in Abhängigkeit von einem mit der Abstrahlrichtung mit maximaler Helligkeit eingeschlossenen Winkel für eine bekannte Leuchtdiode vom Typ HPWT-DX00 veranschaulicht;
- Figur 3: eine schematische Draufsicht auf eine Ausführungsform der erfindungsgemäßen Beleuchtungsvorrichtung;
- Figur 4: eine Seitenschnittansicht der Beleuchtungsvorrichtung von Figur 3, entsprechend der Schnittlinie I-I;
- Figur 5: eine vergrößerte Ansicht des Bereichs III von Figur 4;
- Figur 6: eine vergrößerte Ansicht des Bereichs II von Figur 3; und
- Figur 7: einen Graph, der die radiale Helligkeitsverteilung in Abhängigkeit vom Abstand zur optischen Achse in der Bildebene (b = 100 cm) in vergleichender Weise für eine bekannte Beleuchtungsvorrichtung und eine Ausführungsform der erfindungsgemäßen Beleuchtungsvorrichtung veranschaulicht.

### Beschreibung der Ausführungsbeispiele

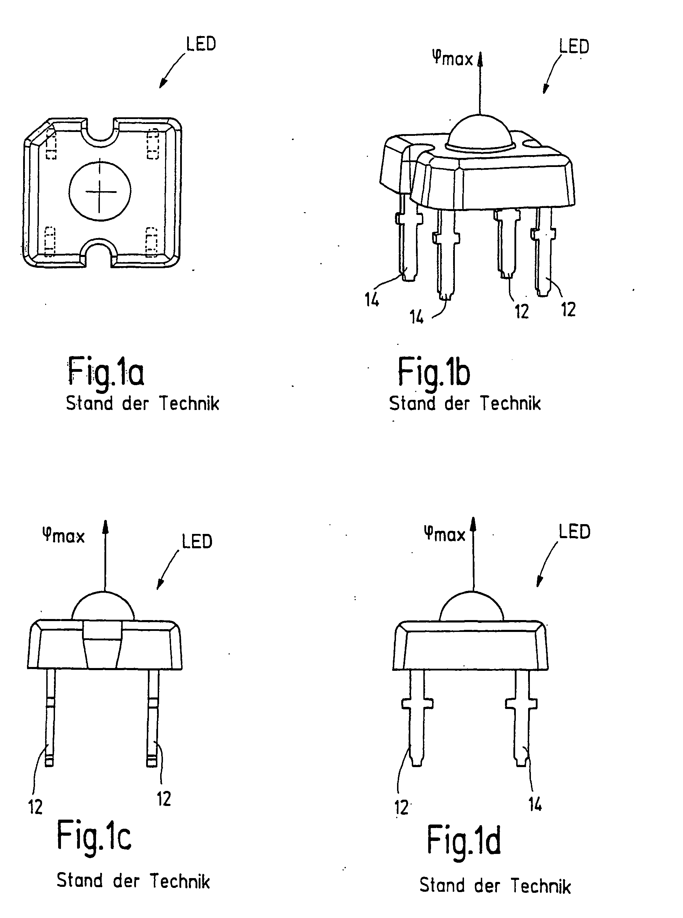

Die Figuren 1a bis 1d zeigen verschiedene Ansichten einer bekannten Leuchtdiode vom Typ HPWT-DX00. Diese Leuchtdiode weist jeweils zwei einer Anode 12 zugeordnete Anschlussbeine und einer Kathode 14 zugeordnete Anschlussbeine auf. Die Abstrahlrichtung ϕₘₐₓ mit maximaler Helligkeit liegt bei diesem Leuchtdiodentyp auf der Symmetrieachse.

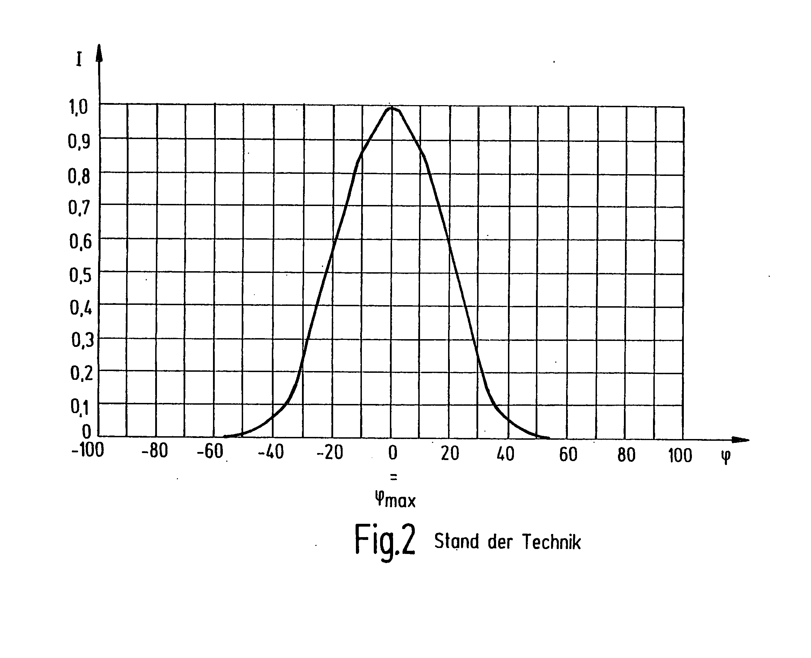

Figur 2 zeigt einen Graph, der die relative Beleuchtungsintensität in Abhängigkeit von einem mit der Abstrahlrichtung mit maximaler Helligkeit eingeschlossenen Winkel für eine bekannte Leuchtdiode vom Typ HPWT-DX00 veranschaulicht. Figur 2 ist zu entnehmen, dass die Beleuchtungsintensität mit zunehmendem Winkel ϕ zur Abstrahlrichtung (ϕₘₐₓ mit maximaler Helligkeit in etwa glockenförmig abnimmt. Der Winkel ϕ_{1/2}, bei dem die Intensität noch 50 % der Maximalintensität erreicht, beträgt gemäß der Darstellung von Figur 2 in etwa 22°. Dieser Winkel ϕ_{1/2} führt bei den bekannten gattungsgemäßen Beleuchtungsvorrichtungen; bei denen mehrere Leuchtdioden derart angeordnet sind, dass ihre Abstrahlrichtungen ϕₘₐₓ mit maximaler Helligkeit parallel sind, dazu, dass im Zusammenhang mit Kameraobjektiven, die Normal- bis Tele-Charakteristik haben, noch ausreichende Ergebnisse erzielt werden, nicht jedoch bei Kameraobjektiven mit Weitwinkel-Charakteristik.

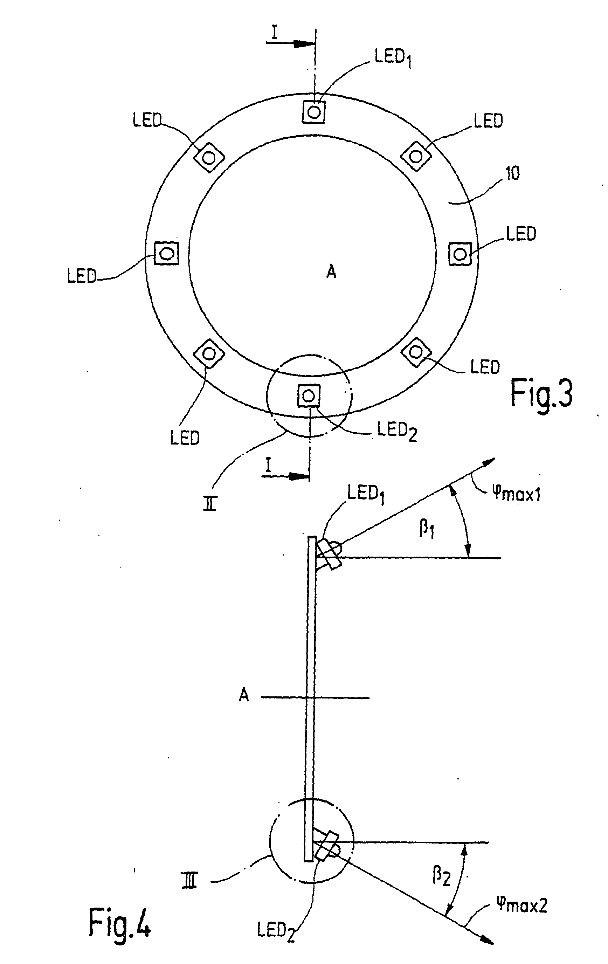

Figur 3 zeigt eine schematische Draufsicht auf eine Ausführungsform der erfindungsgemäßen Beleuchtungsvorrichtung. Bei dieser Ausführungsform sind acht Leuchtdioden LED symmetrisch zu einer optischen Achse A auf einer kreisringförmigen Platine 10 angeordnet, und zwar derart, dass die Abstrahlrichtungen ϕₘₐₓ mit maximaler Helligkeit nicht parallel zueinander verlaufen. Bei den in Figur 3 dargestellten Leuchtdioden LED kann es sich beispielsweise um die anhand der Figuren 1a bis 1d und 2 beschriebenen Leuchtdiode vom Typ HPWT-DX00 handeln.

Figur 4 zeigt eine Seitenschnittansicht der Beleuchtungsvorrichtung von Figur 3, entsprechend der Schnittlinie I-I. Figur 4 ist zu entnehmen, dass die Beleuchtungsvorrichtung eine optische Achse A aufweist, und dass die Mehrzahl von Leuchtdioden LED derart angeordnet ist, dass ihre Abstrahlrichtungen ϕₘₐₓ mit maximaler Helligkeit einem Winkel β mit der optischen Achse A einschließen. Im dargestellten Fall beträgt der Winkel β ungefähr 30°, was einer bevorzugten Ausführungsform entspricht. Vorzugsweise wird die erfindungsgemäße Beleuchtungsvorrichtung derart an einer Kamera angeordnet, dass die optische Achse A der Beleuchtungsvorrichtung mit der optischen Achse der Kamera zusammenfällt.

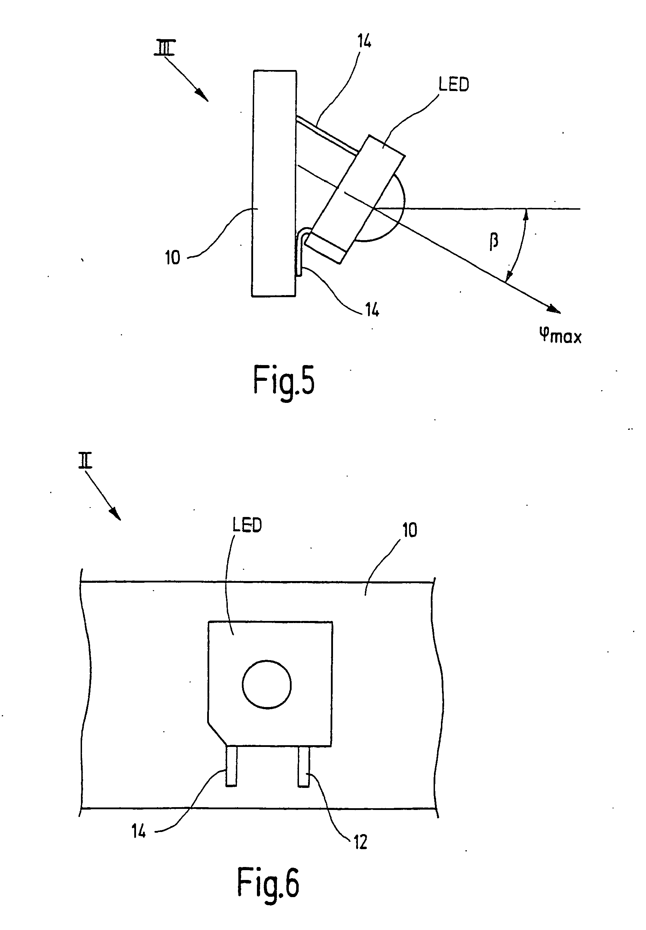

Figur 5 zeigt eine vergrößerte Ansicht des Bereichs III von Figur 4. Beispielsweise wenn die anhand der Figuren 1a bis 1d und 2 erläuterte Leuchtdiode vom Typ HPWT-DX00 eingesetzt wird, können die Leuchtdioden LED nicht mehr in herkömmlicher Weise auf einer flachen Leiterplatte wie ein übliches "bedrahtetes" Bauelement bestückt werden. Der Darstellung von Figur 5 ist eine alternative Befestigungsvariante für eine derartige Leuchtdiode LED zu entnehmen. Bei der dargestellten Ausführungsform sind die bezüglich des Rings beziehungsweise der Platine 10 außen liegenden Anschlussbeine 12, 14 der Leuchtdiode LED nach außen derart umgebogen, dass jeweils beide Elektroden 12, 14 der Leuchtdiode LED nach außen geführt werden und dort auf einer Leiterplatte 10 wie oberflächenmontierte Bauteile aufgelötet werden können. Die nicht umgebogenen inneren Anschlussbeine der Leuchtdiode LED stoßen an der an dieser Stelle nicht durchbohrten Leiterplatte beziehungsweise Platine 10 an und dienen als Abstandshalter. Über die Lage der Abknickstelle und die Höhe der verbliebenen Anschlussbeine 12, 14 lässt sich der Neigungswinkel β in weiten Bereichen einstellen beziehungsweise festlegen.

Figur 6 zeigt eine vergrößerte Ansicht des Bereichs II von Figur 3. Dabei entspricht die Darstellung von Figur 6 einer Draufsicht bezogen auf die Seitenansicht von Figur 5. Figur 6 ist insbesondere zu entnehmen, dass das umgebogene Kathoden-Anschlussbein 14 und das umgebogene Anoden-Anschlussbein 12 bezogen auf den Ring 10 nach außen geführt ist, um die im Zusammenhang mit Figur 5 erläuterte Kontaktiervariante zu ermöglichen.

Obwohl dies nicht dargestellt ist, sind wie erwähnt auch Ausführungsformen denkbar, bei denen die Leuchtdioden auf einem gemeinsamen inneren Kupferring aufgelötet sind, beispielsweise derart, dass alle Dioden ein gemeinsames Kathodenpotential aufweisen. Dadurch können die Kathoden beispielsweise gemeinsam mittels eines Schalttransistors mit Masse verbunden werden, was die elektrische Ansteuerung erleichtert.

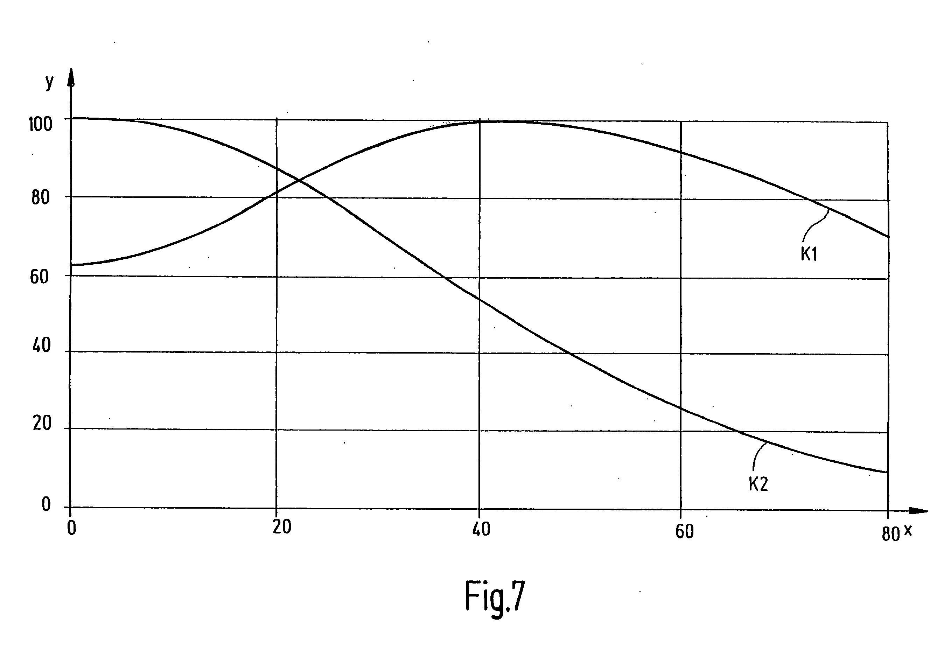

Figur 7 zeigt einen Graph, der die radiale Helligkeitsverteilung in Abhängigkeit vom Abstand zur optischen Achse in der Bildebene (b = 100 cm) in vergleichender Weise für eine bekannte Beleuchtungsvorrichtung und eine Ausführungsform der erfindungsgemäßen Beleuchtungsvorrichtung veranschaulicht, wobei diese relative Helligkeit in Figur 7 auf der Y-Achse in % aufgetragen ist, während der Abstand zur optischen Achse in der Bildebene (b = 100 cm) auf der X-Achse in cm aufgetragen ist. Dabei veranschaulicht die Kurve K1 den Verlauf der radialen Helligkeitsverteilung für die erfindungsgemäße Beleuchtungsvorrichtung, während die Kurve K2 den Verlauf der Helligkeitsverteilung für eine bekannte Beleuchtungsvorrichtung veranschaulicht. Durch einen Vergleich der Kurven K1 und K2 ist zu erkennen, dass mit der erfindungsgemäßen Beleuchtungsvorrichtung ab einem Abstand von etwas mehr als 20 cm zur optischen Achse in der Bildebene mit der erfindungsgemäßen Beleuchtungsvorrichtung eine deutlich höhere relative Helligkeit erzielt wird.

Die vorhergehende Beschreibung der Ausführungsbeispiele gemäß der vorliegenden Erfindung dient nur zu illustrativen Zwecken und nicht zum Zwecke der Beschränkung der Erfindung. Im Rahmen der Erfindung sind verschiedene Änderungen und Modifikationen möglich, ohne den Umfang der Erfindung sowie ihre Äquivalente zu verlassen.

## Patentansprüche

1. Beleuchtungsvorrichtung für eine Bilderzeugungsvorrichtung, insbesondere für eine Bilderzeugungsvorrichtung mit einem Weitwinkelobjektiv, mit einer ringförmigen Platine und mit einer Mehrzahl von jeweils zwei Elektroden aufweisenden Leuchtdioden (LED), die auf der ringförmigen Platine ringförmig angeordnet sind, wobei jede Leuchtdiode (LED) zumindest eine Abstrahlrichtung (ϕₘₐₓ) mit einer maximalen Helligkeit aufweist und wobei die Beleuchtungsvorrichtung eine optische Achse (A) aufweist, und zumindest ein Teil der Mehrzahl von Leuchtdioden (LED) derart angeordnet ist, dass ihre Abstrahlrichtung (ϕₘₐₓ) mit maximaler Helligkeit einen Winkel (β) mit der optischen Achse (A) einschließen, der ungleich 0° ist und zumindest einen Teil der Mehrzahl von Leuchtdioden (LED) derart angeordnet ist, dass zumindest einige der Abstrahlrichtungen (ϕₘₐₓ) mit maximaler Helligkeit nicht parallel zueinander verlaufen, **dadurch gekennzeichnet, dass** die Leuchtdioden (LED) jeweils vier Anschlussbeine aufweisen, von denen jeweils zwei außen liegende Anschlussbeine (12,14) nach außen derart umgebogen sind, dass diese als die beiden Elektroden nach außen geführt und dort auf der Platine (10) wie oberflächenmontierte Bauteile aufgelötet sind, wobei die nicht umgebogenen inneren Anschlussbeine der Leuchtdioden (LED) als Abstandshalter an der an dieser Stelle nicht durchbohrten Platine (10) anstoßen und über die Lage der Abknickstelle und die Höhe der verbliebenen Anschlussbeine (12,14) der Winkel (β) festgelegt ist.

2. Beleuchtungsvorrichtung nach Anspruch 1, **dadurch gekennzeichnet, dass** der Winkel (β) zwischen den Abstrahlrichtungen (ϕₘₐₓ) mit maximaler Helligkeit und der optischen Achse (A) im Bereich von 15 bis 45° liegt, insbesondere ungefähr 30° beträgt.

3. Beleuchtungsvorrichtung nach einem der vorhergehenden Ansprüche, **dadurch gekennzeichnet, dass** die Leuchtdioden (LED) symmetrisch zur optischen Achse (A) der Beleuchtungsvorrichtung angeordnet sind.

4. Beleuchtungsvorrichtung nach einem der vorhergehenden Ansprüche, **dadurch gekennzeichnet, dass** die Leuchtdioden (LED) kreisringförmig angeordnet sind.

5. Beleuchtungsvorrichtung nach Anspruch 1, **dadurch gekennzeichnet, dass** der Winkel (β) zwischen den Abstrahlrichtungen (ϕₘₐₓ) mit maximaler Helligkeit und der optischen Achse (A) in Form einer Normalen zu der Platine eingeschlossen wird.

6. Beleuchtungsvorrichtung nach einem der vorhergehenden Ansprüche, **dadurch gekennzeichnet, dass** von den vier Anschlussbeinen der Leuchtdioden (LED) zumindest ein Anschlussbein (12) einer Kathode und ein Anschlussbein (14) einer Anode zugeordnet ist, wobei die Anode und die Kathode die Elektroden sind.

7. Beleuchtungsvorrichtung nach einem der vorhergehenden Ansprüche, **dadurch gekennzeichnet, dass** sie vier bis sechzehn Leuchtdioden (LED) aufweist, insbesondere acht Leuchtdioden (LED).

8. Beleuchtungsvorrichtung nach einem der vorhergehenden Ansprüche, **dadurch gekennzeichnet, dass** zumindest ein Teil der Leuchtdioden (LED) vom Typ HPWT-DH00 ist.

9. Verwendung einer Beleuchtungsvorrichtung nach einem der vorhergehenden Ansprüche bei der optischen Kraftfahrzeug-Achsvermessung.

## Claims

1. Illumination apparatus for an image-producing apparatus, in particular for an image-producing apparatus with a wide-angle lens, with an annular printed-circuit board and with a plurality of light-emitting diodes (LED) which in each case have two electrodes and are arranged in ring-shaped fashion on the ring-shaped printed-circuit board, wherein each light-emitting diode (LED) has at least one emission direction (ϕₘₐₓ) with a maximum brightness and wherein the illumination apparatus has an optical axis (A) and at least some of the plurality of light-emitting diodes (LED) are arranged such that their emission direction (ϕₘₐₓ) with maximum brightness encloses an angle (β) with the optical axis (A), which angle is not equal to 0°, and at least some of the plurality of light-emitting diodes (LED) are arranged such that at least some of the emission directions (ϕₘₐₓ) with maximum brightness are not parallel to one another, **characterized in that** the light-emitting diodes (LED) each have four connecting legs, of which in each case two outer connecting legs (12, 14) are bent outwards such that, as the two electrodes, they are guided outwards and soldered there on the printed-circuit board (10) like surface-mounted components, wherein the unbent inner connecting legs of the light-emitting diodes (LED) abut the printed-circuit board (10), which is not bored through at this location, as spacers and the angle (β) is fixed via the position of the bending location and via the height of the remaining connecting legs (12, 14).

2. Illumination apparatus according to Claim 1, **characterized in that** the angle (β) between the emission directions (ϕₘₐₓ) with maximum brightness and the optical axis (A) is in the range of 15 to 45°, in particular approximately 30°.

3. Illumination apparatus according to one of the preceding claims, **characterized in that** the light-emitting diodes (LED) are arranged symmetrically with respect to the optical axis (A) of the illumination apparatus.

4. Illumination apparatus according to one of the preceding claims, **characterized in that** the light-emitting diodes (LED) are arranged in an annular fashion.

5. Illumination apparatus according to Claim 1, **characterized in that** the angle (β) between the emission directions (ϕₘₐₓ) with maximum brightness and the optical axis (A) is enclosed in the form of a normal to the printed-circuit board.

6. Illumination apparatus according to one of the preceding claims, **characterized in that**, of the four connecting legs of the light-emitting diodes (LED), at least one connecting leg (12) is assigned to a cathode and one connecting leg (14) is assigned to an anode, the anode and the cathode being the electrodes.

7. Illumination apparatus according to one of the preceding claims, **characterized in that** it has four to sixteen light-emitting diodes (LED), in particular eight light-emitting diodes (LED).

8. Illumination apparatus according to one of the preceding claims, **characterized in that** at least some of the light-emitting diodes (LED) are of the HPWT-DH00 type.

9. Use of an illumination apparatus according to one of the preceding claims in optical motor vehicle axial measurements.

## Revendications

1. Dispositif d'éclairage pour un dispositif de génération d'images en particulier ayant un objectif grand-angulaire, avec une platine annulaire et une multitude de diodes électroluminescentes (DEL) présentant chacune deux électrodes et disposées en forme d'anneau sur la platine annulaire, chaque diode électroluminescente (DEL) présentant au moins une direction de rayonnement (ϕₘₐₓ) avec une luminosité maximale, et le dispositif d'éclairage présentant un axe optique (A), et dont au moins une partie de la multitude de diodes électroluminescentes (DEL) à la direction de rayonnement (ϕₘₐₓ) de luminosité maximale faisant avec l'axe optique (A) un angle (β) qui diffère de 0°, et dont au moins une partie de la multitude de diodes électroluminescentes (DEL) a au moins certaines des directions de rayonnement (ϕₘₐₓ) de luminosité maximale non parallèles,
**caractérisé en ce que**
les diodes électroluminescentes (DEL) présentent chacune quatre jambes de raccordement dont respectivement deux jambes de raccordement extérieures (12, 14) sont pliées vers l'extérieur de manière à sortir comme deux électrodes brasées sur la platine (10) comme des composants montés en surface, les jambes de raccordement intérieures non pliées des diodes électroluminescentes (DEL) étant en butée, en tant qu'écarteurs, contre la platine (10) non percée à cet endroit, et l'angle (β) étant défini par la position de l'endroit de pliage et la hauteur des jambes de raccordement (12, 14) restantes.

2. Dispositif d'éclairage selon la revendication 1,
**caractérisé en ce que**
l'angle (β) entre les directions de rayonnement (ϕₘₐₓ) de luminosité maximale et l'axe optique (A) est de l'ordre de 15 à 45°, en particulier de 30° environ.

3. Dispositif d'éclairage selon l'une quelconque des revendications précédentes,
**caractérisé en ce que**
les diodes électroluminescentes (DEL) sont disposées symétriquement par rapport à l'axe optique (A) du dispositif d'éclairage.

4. Dispositif d'éclairage selon l'une quelconque des revendications précédentes,
**caractérisé en ce que**
les diodes électroluminescentes (DEL) sont disposées de manière circulaire.

5. Dispositif d'éclairage selon la revendication 1,
**caractérisé en ce que**
l'angle (β) entre les directions de rayonnement (ϕₘₐₓ) avec la luminosité maximale et l'axe optique (A) est enfermé sous la forme d'une normale par rapport à la platine.

6. Dispositif d'éclairage selon l'une quelconque des revendications précédentes,
**caractérisé en ce que**
parmi les quatre jambes de raccordement des diodes électroluminescentes (DEL), au moins une jambe de raccordement (12) est associée à une cathode et une jambe de raccordement (14) à une anode, l'anode et la cathode étant les électrodes.

7. Dispositif d'éclairage selon l'une quelconque des revendications précédentes,
**caractérisé en ce qu'**
il présente de quatre à seize diodes électroluminescentes (DEL), en particulier huit diodes électroluminescentes (DEL).

8. Dispositif d'éclairage selon l'une quelconque des revendications précédentes,
**caractérisé en ce qu'**
au moins une partie des diodes électroluminescentes (DEL) est de type HPWT-DH00.

9. Utilisation d'un dispositif d'éclairage selon l'une quelconque des revendications précédentes, pour la mesure des essieux d'un véhicule automobile.
